# EUROPÄISCHE PATENTSCHRIFT

(11) **EP 3 214 290 B1**
(45) Veröffentlichungstag und Bekanntmachung des Hinweises auf die Patenterteilung: **15.04.2026**
(21) Anmeldenummer: 16158557.5
(22) Anmeldetag: 03.03.2016
(51) Int. Cl.: F02C 7/04, F02K 3/062, F02K 1/36, B63H 11/00, F02C 7/055

(54) **EFFIZIENTER STRAHLANTRIEB**
EFFICIENT JET PROPULSION
PROPULSION PAR REACTION EFFICACE

(43) Veröffentlichungstag der Anmeldung: 06.09.2017
(73) Patentinhaber: Alpha Velorum AG, 9495 Triesen (LI)
(72) Erfinder: ZIEGLER, Martin, CH-6422 Steinen (CH)
(74) Vertreter: Troesch Scheidegger Werner AG

(56) Entgegenhaltungen:
- US-A- 2 696 953
- US-A- 3 066 893

## Beschreibung

Die Erfindung betrifft ein Modul nach dem Oberbegriff des Anspruches 1 zum Anbau an die Front eines Triebwerks oder zur Integration in Teile eines Fahrzeuges, die einer Strömung ausgesetzt sind. Die Erfindung betrifft ferner eine Antriebsmaschine mit diesem Modul und ein Verfahren zur Erzeugung von Schub, bei welchem das Modul oder die Antriebsmaschine eingesetzt wird.

Die Erfindung wird anhand eines Antriebs für Verkehrsflugzeuge beschrieben, kann aber allgemein für den Antrieb von Fahrzeugen jeder Art ausgeführt werden, dazu gehören Flugzeuge, Landfahrzeuge, und Schiffe.

Strahlantriebe nach dem Stand der Technik fördern Luft oder Wasser mit Hilfe eines Propulsors und erzeugen einen Strahl hoher Geschwindigkeit, der rückwärts gegen die Fahrtrichtung ausgestossen wird. Der Propulsor wird mit einer Antriebsmaschine angetrieben, das kann eine Gasturbine sein, ein Verbrennungsmotor, oder ein Elektromotor. Nach der allgemeinen Strahltheorie ergibt sich eine Schubkraft dann aus der Differenz der Strömungsimpulse an den Bilanzgrenzen eines Strahlantriebs. Diese Theorie basiert auf den Kraftgesetzen von Newton, und so entsteht Schub als Reaktion auf Trägheitskräfte aus der Beschleunigung ruhender Fluide. Damit werden Fahrzeuge angetrieben.

Die Effizienz von Strahlantrieben ist das Verhältnis von Schubleistung zu aufgewendeter Leistung. Die Schubleistung ist das Produkt aus Schubkraft multipliziert mit der Geschwindigkeit des Fahrzeugs im Fluid. Diese Leistung ist erforderlich, um das Fahrzeug durch Luft oder Wasser zu bewegen. Die aufgewendete Leistung ist die Eingangsleistung der Antriebsmaschine des Propulsors. Darin ist die mechanische Wellenleistung für den Propulsor enthalten, Verluste entstehen aus Abwärme und Strahl. Thermische Verluste stammen aus Wärmeverlusten der Antriebsmaschine, Strahlverluste aus der kinetischen Energie im Abstrom des Antriebs.

Der Stand der Technik für Flugantriebe ist sehr umfassend beschrieben im Fachbuch "Flugzeugtriebwerke" von Willy J.G. Bräunling, Springer Verlag, 3. Auflage, 2009. Danach kann man die Effizienz solcher Antriebe erhöhen, indem man den thermischen Wirkungsgrad des Motors steigert, bei Verkehrsflugzeugen ist das eine Gasturbine, und indem man den Propulsionswirkungsgrad des Strahlantriebs verbessert. Hierzu muss man zum einen das Druckverhältnis des Joule-Prozesses erhöhen, das steigert den thermischen Wirkungsgrad der Gasturbine, zum anderen muss man den Massenstrom erhöhen, das reduziert die Strahlgeschwindigkeit und damit die Strahlverluste im Abstrom und verbessert den Propulsionswirkungsgrad.

Beide Massnahmen sind bei allen Strahlantrieben wirksam und wurden konstruktiv vielfältig umgesetzt. Moderne Strahlantriebe haben inzwischen einen sehr hohen Entwicklungsstand erreicht und jede weitere Verbesserung ist nur mit hohem Aufwand erzielbar.

Aus der US-Patentschrift US 2 696 953 A ist ein Modul mit den Merkmalen des Oberbegriffes von Anspruch 1 bekannt. Ein weiteres Modul mit zu dem Vorwärtsschub eines Stromlinienkörpers beitragenden Tragflächenelementen ist in der US-Patentschrift US 3 066 893 A beschrieben.

Aufgabe der Erfindung ist die Bereitstellung eines verbesserten Strahlantriebes und ein verbessertes Verfahren zum Betreiben eines Strahlantriebes.

Diese Aufgabe wird durch ein Modul mit den Merkmalen des Anspruches 1, eine Antriebsmaschine mit den Merkmalen des Anspruches 6 und ein Verfahren mit den Merkmalen des Anspruches 13 gelöst. Merkmale, die die Erfindung in alternativer oder vorteilhafter Weise weiterbilden, sind Gegenstand der abhängigen Patentansprüche. Der mittlere Aussendurchmesser des statischen Propulsors ist kleiner als ein grösster Aussendurchmesser des Verdrängungskörpers.

Beschrieben ist ein Verfahren zur Steigerung der Effizienz von Strahlantrieben für den Vortrieb von Fahrzeugen, wobei der Strahlantrieb Energie aus einer Propulsionsströmung dadurch "erntet", indem
- ruhendes Fluid durch einen fluiddynamischen Verdrängungskörper VK lateral verdrängt wird,
- das verdrängte Fluid mit Hilfe einer Potenzialsenke von der nahen Umgebung des Strahlantriebs in das Innere eines statischen Propulsors SP geleitet wird, wobei das Fluid über eine Anzahl statischer Schubflächen SFi strömt, an deren Oberfläche infolge der Strömung Auftriebskräfte Fsi mit einer Kraftkomponente in Fahrtrichtung entstehen, und
- das Fluid durch einen dynamischen Propulsor DP aus dem Innenraum des statischen Propulsors SP nach hinten gefördert und mittels eines angetriebenen Propellers P unter Verbrauch von Wellenleistung nach hinten beschleunigt und gegen die Fahrtrichtung als Strahl ausgestossen wird, wobei der statische Druck der Strömung im Gehäuse GH des dynamischen Propulsors DP kurz vor dem Propeller P mit Hilfe einer Einlaufdüse ED gesenkt wird.

Der Verdrängungskörper hat eine fluiddynamische Wirkung, da er speziell dazu ausgebildet ist, einen Fluidstrom zu verdrängen, insbesondere umzuleiten.

Beschrieben ist weiterhin eine Vorrichtung zur Steigerung der Effizienz von Strahlantrieben, wobei drei Funktionskomponenten im Strahlantrieb enthalten und von vorne nach hinten aufeinander folgend angeordnet sind, erstens ein Verdrängungskörper VK, der das Fluid lateral verdrängt, zweitens ein statischer Propulsor SP mit einer oder mehreren statischen Schubflächen SFi, die das Fluid aus der Umgebung von aussen nach innen umströmt, und drittens, ein dynamischer Propulsor DP mit einem angetriebenen Propeller P und einem Gehäuse GH, der das Fluid aus dem Innenraum des statischen Propulsors SP fördert und als Strahl nach hinten ausstösst, wobei der Einlauf des Gehäuses GH als Einlaufdüse ED ausgebildet ist.

Die Schubfläche oder die Schubflächen können beispielsweise gerüstartig zu einer Einheit zusammengehalten werden, also durch Stangen oder auch einem Plattenträger. Über dieses Gerüst bzw. diesen Korpus kann der statische Propulsor einerseits mit dem Verdrängungskörper, und andererseits mit einem Triebwerk oder einem dynamischen Propulsor DP verbunden werden. In dem Korpus kann die mindestens eine Schubfläche auch bezüglich der Sehne ihres Tragflächenprofils verkippbar angebracht sein, sodass ihre Anströmrichtung der Reisegeschwindigkeit angepasst werden kann.

Offenbart ist darüber hinaus der Verdrängungskörper VK als Bestandteil eines Luftfahrzeuges, beispielsweise als Teil des Rumpfes, oder als Teil einer Tragfläche, oder als Teil einer Triebwerksgondel.

Offenbart ist darüber hinaus der Verdrängungskörper VK als Bestandteil eines Schiffes, beispielsweise als Teil des Rumpfes, oder als Teil einer Tragfläche, oder als Teil einer Triebwerksgondel.

Offenbart ist darüber hinaus der Verdrängungskörper VK als Bestandteil eines Landfahrzeuges, beispielsweise als Teil der Karosserie, oder als Teil einer Tragfläche, oder als Teil einer Triebwerksgondel.

Beschrieben ist weiterhin ein statischer Propulsor für einen Verdrängungskörper VK, welcher mehrere hintereinander angeordnete und aerodynamisch profilierte Schubflächen SFi besitzt, deren Profilschnitte so angeordnet sind, dass die Überdruckseite des Profils jeweils nach hinten und nach aussen weist, dass die Unterdruckseite des Profils jeweils nach innen und nach vorne weist, und dass die Profilsehne in Fahrtrichtung nach vorne geneigt ist.

Die Schubflächen SFi des statischen Propulsors können als ringförmige Tragflächen ausgebildet und konzentrisch hintereinander angeordnet sein.

Die Schubflächen SFi des statischen Propulsors können als Kreissegmente oder als Tragflächenstücke ausgebildet und/oder in die Aussenwand eines Fahrzeugs eingelassen werden.

Der Verdrängungskörper kann darüber hinaus eine Gasturbine eingebaut haben, wobei der Verdrängungskörper eine Einlauföffnung mit nachfolgendem Diffusor für die Arbeitsluft der Gasturbine besitzen kann, und die Gasturbine einen oder mehrere dynamische Propulsor antreibt.

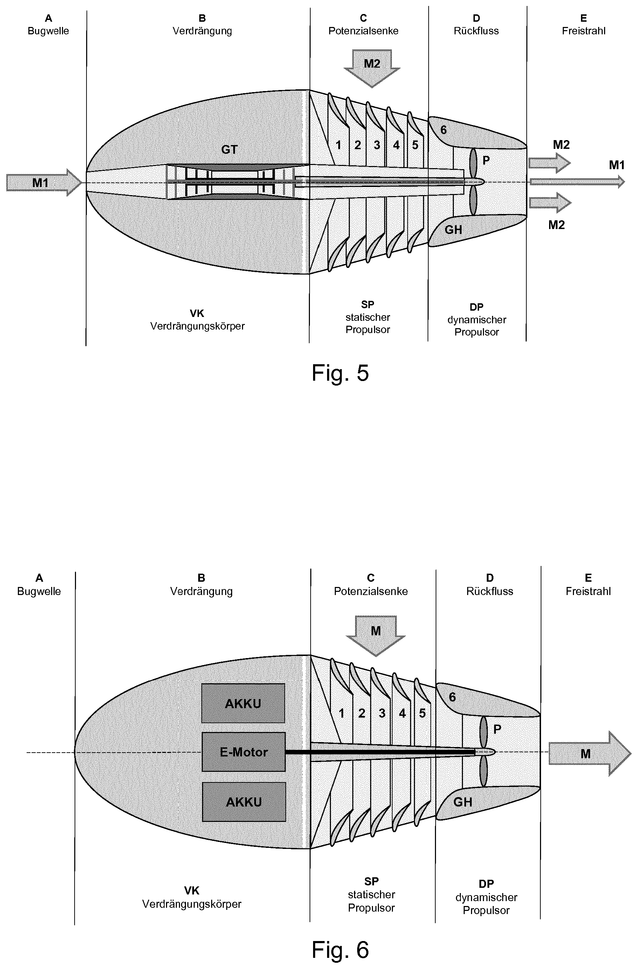

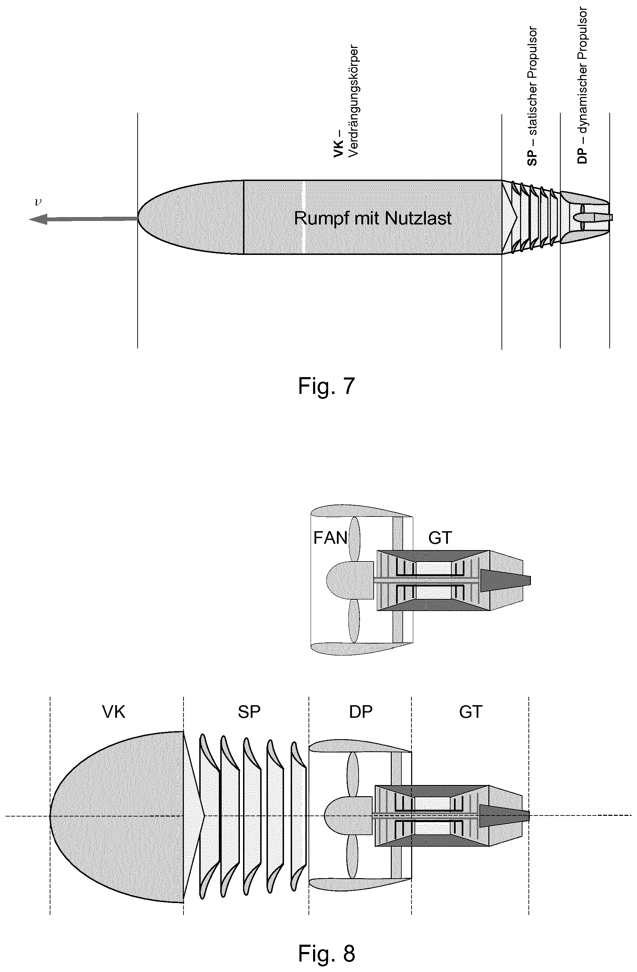

Die Gasturbine kann somit also vor (Fig.5) oder hinter (Fig.8) dem dynamischen Propulsor eingebaut sein.

Anstelle einer Gasturbine kann auch beispielsweise ein Elektromotor zum Antrieb der oder des Propulsors (bzw. Propeller) verwendet werden, wobei der Elektromotor und zugehörige Energiequellen, wie Akkus, im Verdrängungskörper angeordnet sein können. Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1:: Darstellung eines Flugmanövers zur Erläuterung des neuen Prinzips "Aerodynamic Energy Harvesting" (AEH) oder "Aerodynamische Energie-Ernte";
- Fig. 2:: Darstellung eines erfindungsgemässen Strahlantriebs mit den drei Baugruppen "Verdrängungskörper" (VK), "statischer Propulsor" (SP), und "dynamischer Propulsor" (DP);
- Fig. 3:: Darstellung des Strömungsfeldes in der Umgebung des neuen Strahlantriebs mit den fünf Zonen, A=Bugwelle, B=Verdrängung, C=Potenzialsenke, D=Rückfluss, und E=Freistrahl.
- Fig. 4:: Darstellung der Kraftübertragung aus der Wechselwirkung zwischen Strömungsfeld und Strahlantrieb mit den dominanten Kraftmechanismen in allen fünf Zonen des Strömungsfeldes, im Einzelnen sind es A=Druckkräfte, B=Reibungskräfte, C=Auftriebskräfte, D=Trägheitskräfte, und E=Scherkräfte.
- Fig. 5:: Darstellung eines Flugzeugantriebs mit einer Gasturbine GT als Antriebsmaschine für den Propulsor und Luftzufuhr über einen Primär-Massenstrom M1 und einen Sekundär-Massenstrom M2.
- Fig. 6:: Darstellung eines Flugzeugantriebs mit einem Elektromotor als Antriebsmaschine für den Propulsor und Akkumulatoren im Verdrängungskörper zur Stromversorgung.
- Fig. 7:: Darstellung eines Strahlantriebs für ein Flugzeug, in dem der komplette Rumpf mit der Nutzlast den Verdrängungskörper bildet.
- Fig. 8:: Darstellung der Vorrichtung zum Nachrüsten von Turbofantriebwerken zur Steigerung der Effizienz mit Hilfe von AEH.

Die Gewinnung von Vortriebsenergie aus einer Strömung ist so alt wie das Segelboot oder das Segelflugzeug. Beide bewegen sich ohne Verbrennungsmotor und gewinnen die Vortriebsenergie direkt aus Strömungen in der Atmosphäre. Verkehrsflugzeuge nutzen Wind im Jet-Stream und verkürzen so die Reisezeit. Ohne Jet-Stream braucht das Flugzeug mehr Energie für die gleiche Strecke.

Die unerreichten Meister der Energiegewinnung aus einer Strömung sind aber Vögel, und hier besonders der Albatros, der den dynamischen Segelflug beherrscht und in der Lage ist tausende von Kilometern um die Antarktis zu fliegen, ohne einen einzigen Flügelschlag. Tatsächlich ist der Energieverbrauch dieser Vögel im Flug geringer als beim Brüten, denn das erfordert Wärme für das Gelege, und diese ist ein Energieverlust für den brütenden Vogel.

Offensichtlich sind Vögel in der Lage aus der Atmosphäre Energie zu ernten, was sie zu technisch unerreichten Flugleistungen befähigt. Das Wort "ernten" bedeutet "einen Ertrag erzielen, nachdem man gesät hat". Der Bauer sät ein Korn und erntet eine Ähre. Wenn die Ähre 20 Körner trägt, dann ist der Erntefaktor 20. Für ein einziges Korn im Acker gibt die Ähre 20 Körner zurück. Der Erntefaktor ist grösser als eins, und der Einsatz hat sich gelohnt.

Dieses allgemeine Prinzip verwendet der Albatros im dynamischen Segelflug. Er wendet einen Anteil Energie für ein Flugmanöver auf, das mehr Energie aus der Scherströmung über dem Ozean gewinnt, als er eingesetzt hat. Der Erntefaktor aus dem Flugmanöver ist grösser als eins, und so fliegt der Vogel in endlosen Bögen hinauf und hinab über den Wogen der stürmischen See.

Im dynamischen Segelflug des Albatros über dem Südpolarmeer liegt der Schlüssel zur Effizienzsteigerung von Strahlantrieben für den Antrieb von Fahrzeugen. Die Kernidee der Erfindung basiert auf "Aerodynamic Energy Harvesting" (AEH), das ist die Gewinnung von Energie aus der Strömung, die den Strömungskörper umgibt. Jeder Anteil Energie, die ein Strahlantrieb auf diese Weise aus der Atmosphäre ernten kann, verbessert die Effizienz des Antriebs und spart Treibstoff.

Die Erfindung löst die Aufgabe, Energie für den Vortrieb von Flugzeugen aus der Strömung zu ernten, die der Strahlantrieb selbst induziert. Das ist so ähnlich wie bei der Selbstinduktion von elektrischen Strömen in Spulen: Der Strom induziert ein Magnetfeld um die Spule, das einen Strom in der Spule induziert. Für AEH induziert der Antrieb eine Strömung, die den Schub des Antriebs erhöht.

Das Prinzip AEH wird nachfolgend erläutert.

Wenn Luft einen Körper umströmt, dann entstehen Luftkräfte, die eine Last heben oder ein Fahrzeug ziehen können. Propeller ziehen ein Flugzeug durch die Luft, und Tragflächen heben es hoch. Ohne Propeller bewegt es sich nicht nach vorne, ohne Flügel steigt es nicht nach oben, und auf dem Mond kann es nicht fliegen, weil die Atmosphäre fehlt.

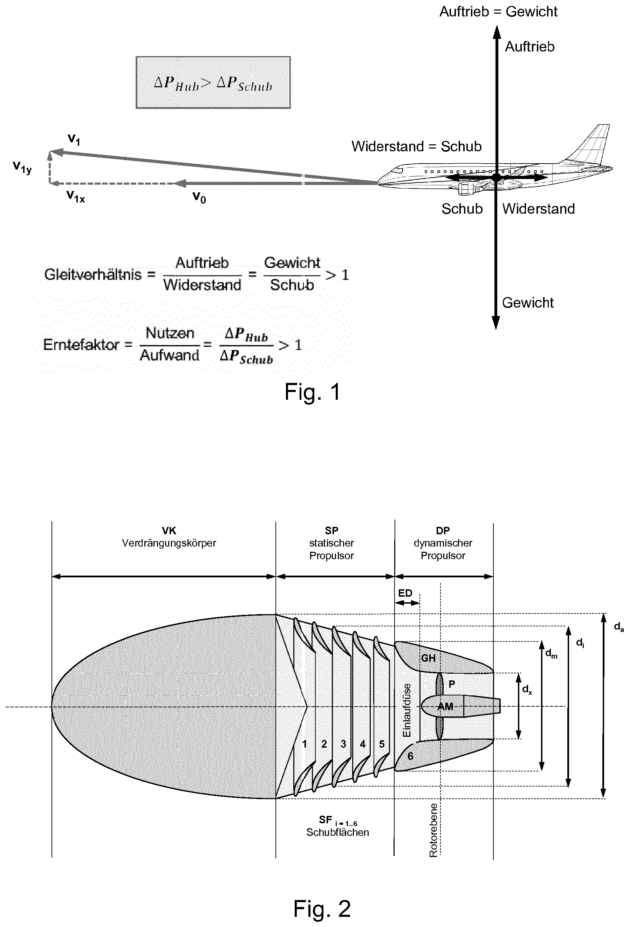

Die Wechselwirkung zwischen Schub und Auftrieb bei der Beschleunigung eines Flugzeugs von einer niedrigen Geschwindigkeit v0 auf eine höhere Geschwindigkeit v1 ist komplex. Figur 1 zeigt dazu ein Flugzeug im stationären Reiseflug, hier sind Auftrieb und Gewicht, sowie Schub und Widerstand im Gleichgewicht. Der Bewegungszustand ist stationär, ohne Beschleunigung. Der Auftrieb ist stets grösser als der Widerstand, und das "Gleitverhältnis" ist immer grösser als eins, das ist Auftrieb geteilt durch Widerstand. Moderne Verkehrsflugzeuge erreichen hier Werte von 15 bis 20, Hochleistungssegelflugzeuge sogar bis 70. Zwischen Tragflügel und Propulsor existiert also ein "Hebelgesetz", denn bei Gleitverhältnis 20 braucht man nur einen einzigen Anteil Schub um 20 Anteile Gewicht zu heben.

Das Flugzeug in Figur 1 wird nun von v0 auf v1 beschleunigt. Auftrieb und Widerstand wachsen mit dem Quadrat der Geschwindigkeit. Der Schub muss den erhöhten Widerstand kompensieren, aber die Tragfläche braucht nur das Gewicht zu tragen, das sich bei diesem Manöver (fast) nicht ändert. Ohne Ruderausschlag beginnt das Flugzeug nun zu steigen, bis sich die Anströmung an der Tragfläche soweit gedreht hat, dass der Auftrieb wieder so gross ist wie das Gewicht. Die Tragfläche wird dann mit kleinerem Anstellwinkel angeströmt, was den Auftriebsbeiwert reduziert, und das Flugzeug steigt. Bei der neuen Geschwindigkeit v1 ist das Flugzeug wieder im stationären Zustand, jetzt aber im Steigflug mit Horizontalgeschwindigkeit v1x und Vertikalgeschwindigkeit v1y. So reagieren alle Flugzeuge.

Um die Horizontalgeschwindigkeit zu erreichen, muss der Propulsor seine Leistung um Δ*P_{Schub}* erhöhen. Da das Flugzeug nun aber steigt, liefert die Tragfläche jetzt zusätzlich die Hubleistung Δ*P_{Hub}* an das Flugzeug und hebt es im Schwerefeld der Erde hoch. Weil das Gleitverhältnis grösser ist als eins, ist der Gewinn an potenzieller Energie aus der Hubarbeit des Auftriebs grösser als der Aufwand für den Zusatzschub, und der Erntefaktor ist grösser als eins. Das Flugzeug "investiert" Schubleistung und "erntet" mehr Hubleistung als es eingesetzt hat. Der Gewinn an potenzieller Energie kann dann beim Sinkflug in Geschwindigkeit und Strecke umgesetzt werden. So fliegen Albatrosse.

Es bedarf nur grundlegender Kenntnisse der Flugmechanik, um den Nachweis zu führen, dass die Hubleistung des Auftriebs bei diesem Manöver stets grösser ist als die zusätzliche Schubleistung für die höhere Geschwindigkeit. Der Hebeleffekt zwischen Tragfläche und Propulsor über das Gleitverhältnis führt hier zu einem Erntefaktor grösser als eins. Die Tragfläche "erntet" potenzielle Energie aus der Atmosphäre, die später genutzt werden kann. Alle Flugzeuge gewinnen einen Teil der Hubarbeit des Auftriebs ihrer Tragflächen direkt aus der Strömung um die Tragflächen herum, und alle Albatrosse fliegen mit genau dieser Energie tausende von Kilometern weit ohne einen Flügelschlag.

Flugmanöver nach Figur 1 sind elementar für den dynamischen Segelflug. Es bedarf einer steten Folge von Höhengewinn und Höhenverlust mit Wechsel der Fluggeschwindigkeit relativ zur Atmosphäre, und mit einem Erntefaktor grösser als eins kann der Albatros die gesamte Energie für seinen Flug aus der Strömung in der Atmosphäre beziehen, die ihn umgibt. Sein Flug ist ein endloses Auf und Ab mit Beschleunigung und Verzögerung in weiten Kurven durch die Scherströmung.

Modellflieger kennen das Prinzip und erreichen mit Segelflugzeugmodellen im dynamischen Segelflug Geschwindigkeiten bis 800 km/h, mit Handstart. Sie ernten die gesamte Vortriebsenergie für die Flugrekorde aus einer Scherströmung am Berghang. Der Weltrekord bei Flugmodellen mit Düsenantrieb liegt bei nur 700 km/h, da kommt die Energie aus dem Tank.

Das Ernte-Prinzip kann man aber auch technisch für den Antrieb von Verkehrsflugzeugen nutzen. Das ist der Gegenstand dieser Erfindung.

Die Erfindung betrifft ein Modul zum Anbau an die Front eines Triebwerks oder zur Integration in Teile eines Fahrzeuges, die einer Strömung ausgesetzt sind, mit einem fluiddynamischen Verdrängungskörper VK mit einer Längsachse, und einem statischen Propulsor SP mit einem mittleren Aussendurchmesser, welcher statische Propulsor sich dem Verdrängungskörper entlang der Längsachse entgegen einer Antriebsrichtung anschliesst und starr mit diesem verbunden ist, wobei der statische Propulsor eine Mehrzahl an Tragflächenelementen SFi aufweist, deren jeweiliger Querschnitt ein Tragflächenprofil hat, wobei Profilsehnen des Tragflächenprofils schräg zur Längsachse ausgerichtet sind, und wobei eine Profilsehne als Verbindungslinie zwischen einer Profilnase und einer Profilhinterkante definiert ist.

Der mittlere Aussendurchmesser des statischen Propulsors errechnet sich entweder über eine Mittelwertbildung seines Aussendurchmesserverlaufs über der Längsachse, oder aus der Mittelung seines grössten und seines kleinsten Aussendurchmessers.

In einer weiteren Ausführungsform der Erfindung sind der Verdrängungskörper und die Tragflächenelemente bezüglich der Längsachse rotationssymmetrisch ausgebildet, sowie zueinander konzentrisch angeordnet.

In einer weiteren Ausführungsform der Erfindung sind die Tragflächenelemente durchgehend oder abschnittsweise kreisringförmig ausgebildet.

In einer weiteren Ausführungsform der Erfindung sind der Verdrängungskörper und der statische Propulsor bezüglich einer Längsebene symmetrisch ausgebildet, insbesondere wobei die Tragflächenelemente plattenförmig oder flügelförmig ausgebildet sind.

In einer weiteren Ausführungsform der Erfindung ist der Verdrängungskörper als Rumpf eines Fahrzeuges, insbesondere eines Flugzeuges oder Schiffes, ausgebildet.

Die Erfindung betrifft weiterhin eine Antriebsmaschine zum Fahrzeugantrieb in einem Fluid, wie beispielsweise Wasser oder Luft, mit einem Modul nach Anspruch 1. Der fluiddynamischen Verdrängungskörper VK weist eine Längsachse auf. Der statischen Propulsor SP weist einen mittleren Aussendurchmesser auf, welcher statische Propulsor sich dem Verdrängungskörper entlang der Längsachse entgegen einer Antriebsrichtung dort anschliesst, wo der Verdrängungskörper seinen grössten Aussendurchmesser hat. Der Verdrängungskörper ist starr mit dem statischen Propulsor verbunden. Die Antriebsmaschine umfasst einen dynamischen Propulsor DP, der sich dem statischen Propulsor SP entlang der Längsachse entgegen der Antriebsrichtung anschliesst und starr mit diesem verbunden ist, wobei der statische Propulsor eine Mehrzahl an Tragflächenelementen SFi aufweist, deren jeweiliger Querschnitt ein Tragflächenprofil hat, wobei Profilsehnen des Tragflächenprofils schräg zur Längsachse ausgerichtet sind, wobei eine Profilsehne als Verbindungslinie zwischen einer Profilnase und einer Profilhinterkante definiert ist, und wobei der dynamische Propulsor DP ein Gehäuse mit mindestens einem Propeller P aufweist.

In einer weiteren Ausführungsform der Erfindung sind der Verdrängungskörper, die Tragflächenelemente und das Gehäuse bezüglich einer Längsachse rotationssymmetrisch ausgebildet, sowie zueinander konzentrisch angeordnet.

In einer weiteren Ausführungsform der Erfindung ist ein mittlerer Aussendurchmesser des statischen Propulsors kleiner als ein grösster Aussendurchmesser des Verdrängungskörpers, und grösser als ein grösster Aussendurchmesser des dynamischen Propulsors.

In einer weiteren Ausführungsform der Erfindung sind die Tragflächenelemente durchgehend oder abschnittsweise kreisringförmig ausgebildet.

In einer weiteren Ausführungsform der Erfindung weist der Verdrängungskörper VK in seinem Inneren eine Gasturbine zum Antreiben des mindestens einen Propellers, eine Kraftstoffzufuhr für die Gasturbine, und an seiner Oberfläche eine Öffnung für eine Sauerstoffzufuhr zur Kraftstoffverbrennung in der Gasturbine aufweist, wobei die Gasturbine über eine sich bis zum dynamischen Propulsor fortsetzende Welle mit dem mindestens einen Propeller verbunden ist.

In einer weiteren Ausführungsform der Erfindung weist der Verdrängungskörper VK in seinem Inneren einen Elektromotor zum Antreiben des mindestens einen Propellers, und insbesondere einen Akkumulator auf, wobei der Elektromotor über eine sich bis zum dynamischen Propulsor fortsetzende Welle mit dem mindestens einen Propeller verbunden ist.

In einer weiteren Ausführungsform der Erfindung weist der dynamische Propulsor eine Einlaufdüse auf.

Die Erfindung betrifft weiterhin ein Verfahren, welches folgende Schritte umfasst:
Verdrängen eines Fluidmassenstroms mit dem fluiddynamischen Verdrängungskörper (VK) eines Moduls nach Anspruch 1 oder einer Antriebsmaschine nach Anspruch 6,
Einströmen des verdrängten Fluidmassenstrom in einen statischen Propulsor des Moduls oder der Antriebsmaschine, und
Hervorrufen einer Kraft an den Tragflächenelementen durch eine Druckdifferenz an den umströmten Oberflächen der Tragflächenelemente,
wobei die Kraft zumindest eine in Antriebsrichtung weisende Komponente hat.

In einer weiteren Ausführungsform der Erfindung umfasst das Verfahren die weiteren Schritte:
Ausströmen des verdrängten Fluidmassenstroms aus dem statischen Propulsor,
Einströmen zumindest des verdrängten Fluidmassenstroms in einen dynamischen Propulsor der Antriebsmaschine, und
Beschleunigen des in den dynamischen Propulsor eingeströmten Fluidmassenstroms mittels mindestens eines Propellers, und
Abgabe des beschleunigten Fluidmassenstroms als Freistrahl an die Umgebung.

Figur 2 zeigt hierzu ein erstes Ausführungsbeispiel des erfindungsgemässen Strahlantriebs mit seinen drei Hauptkomponenten, nämlich dem Verdrängungskörper VK, dem statischen Propulsor SP und dem dynamischen Propulsor DP.

Der Verdrängungskörper VK schiebt Luft beiseite und schafft Platz für den Strömungskörper, fast so als würde man ein Loch in die Luft bohren. Das Flugzeug wirkt dann wie eine Tunnelbohrmaschine, hinter der ein Tunnel immer wieder einstürzt.

Der statische Propulsor SP erzeugt Schub aus Auftriebskräften an einer Anzahl von starren und/oder verstellbaren Schubflächen SFi, i = 1 bis n, die als ringförmige Tragflächen ausgebildet sind und konzentrisch nacheinander hinter dem Verdrängungskörper angeordnet werden. Der Profilschnitt dieser Ringflügel zeigt ein aerodynamisch wirksames und gewölbtes Profil, dessen Sehne in Flugrichtung zumindest anteilig nach vorne geneigt ist (unter einem Schubflächenwinkel bezogen auf die Fahrtrichtung). Die Unterdruckseite des Profils zeigt jeweils nach vorne, und seine Überdruckseite nach hinten. Dargestellt sind fünf starre Schubflächen als Ringflügel, eine sechste starre Schubfläche ist das Gehäuse GH des dynamischen Propulsors.

Die Schubflächen sind Tragflächenelemente deren jeweiliger Querschnitt ein Tragflächenprofil hat. Die Profilsehne ist gemäss bekannter Lehre der Aerodynamik definiert als Verbindungslinie zwischen der Profilnase und einer Profilhinterkante.

Der dynamische Propulsor DP enthält den mit einer Antriebsmaschine AM angetriebenen Propeller P im Gehäuse GH. Der Propeller fördert Luft aus dem Innenraum des statischen Propulsors SP und erzeugt einen Strahl, der den Antrieb nach hinten verlässt. Der Zufluss des Gehäuses GH ist als Einlaufdüse ED ausgebildet. Die Rotationsebene des Propellers P liegt stromabwärts von dieser Düse.

Der Verdrängungskörper hat den grössten Aussendurchmesser da, welcher vorzugsweise grösser ist als der Aussendurchmesser der grössten Schubfläche 1. Alle nachfolgenden starren Schubflächen haben vorzugsweise einen jeweils kleineren Aussendurchmesser di als der Vorgänger. Der mittlere Aussendurchmesser der Schubflächen bildet sich entweder als Durchschnitt aller Aussendurchmesser oder als Mittelwert aus den Aussendurchmessern der kleinsten und der grössten Schubfläche (im Beispiel 1 und 5). Vorzugsweise ist der Aussendurchmesser dm des Propellergehäuses GH kleiner als der Aussendurchmesser der letzten Schubfläche des statischen Propulsors SP. Der Strahl am Ausgang des dynamischen Propulsors hat den Durchmesser dx.

Mit dieser Anordnung kann man Energie aus der Propulsionsströmung ernten.

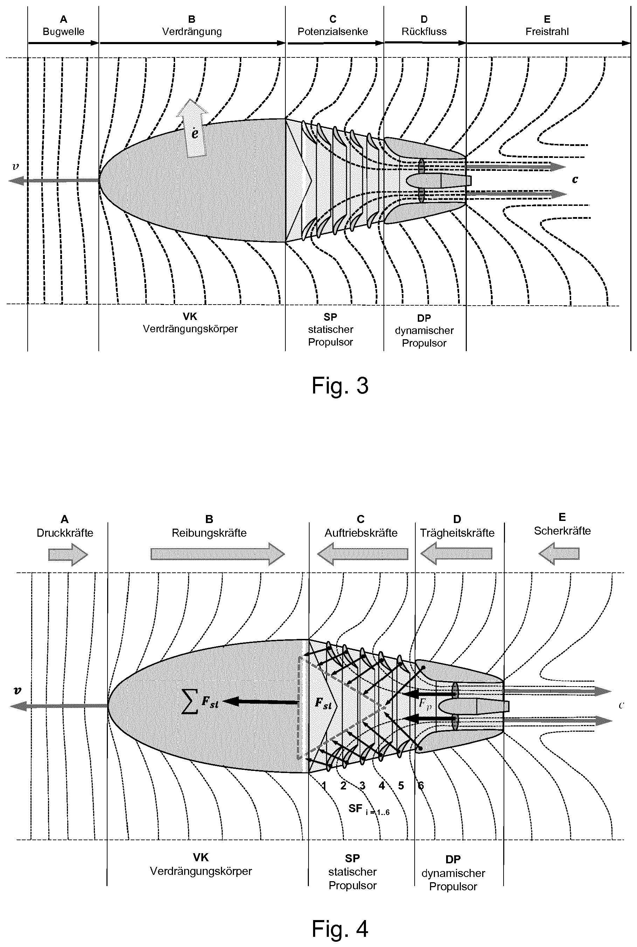

Figur 3 zeigt hierzu das Strömungsfeld, das der Strahlantrieb bei seiner Fahrt durch ein Fluid, z.B. Luft, in seiner Umgebung induziert. Die Darstellung zeigt die Bodensicht, in der sich der Antrieb mit Geschwindigkeit v von rechts nach links durch ruhende Luft bewegt.

Der Propeller pumpt Luft aus dem Inneren des statischen Propulsors nach hinten, wo sie das Gehäuse als Strahl mit Geschwindigkeit c verlässt. Weil sie im Inneren nun fehlt, strömt neue Luft von aussen zwischen den statischen Schubflächen hindurch in das Innere des statischen Propulsors hinein und wird durch den dynamischen Propulsor wieder in den Strahl gefördert. Dadurch bilden sich fünf lokale Zonen im Strömungsfeld um den Strahlantrieb herum, die sich gemeinsam mit dem Antrieb durch die Atmosphäre bewegen.
a) Bugwelle: Das ist der Bereich vor dem Verdrängungskörper, in dem die Luft diesen bereits "sieht" und sich der Druck im Strömungsfeld durch den Staueffekt erhöht. Der Staueffekt induziert dann eine laterale Verdrängungsströmung, und die Luft weicht dem Verdrängungskörper aus. Aus dem Staueffekt stammt ein Teil des Luftwiderstands, den der Schub überwinden muss.
b) Verdrängung: In diesem Bereich wird die Luft durch den Verdrängungskörper beiseitegeschoben, und durch "Reibung" an der Oberfläche in Fahrtrichtung mitgerissen. Es bildet sich eine Grenzschicht aus, bei der Luftteilchen an der Wand haften und die gleiche Geschwindigkeit erhalten wie der Verdrängungskörper. Dadurch entsteht ein Energiefluss *ė* vom Strömungskörper in die Grenzschicht hinein. Der Energieverlust des Körpers ist Energiegewinn der Grenzschicht, und in Wandnähe entsteht eine Strömung in Fahrtrichtung. Die Reibungskräfte wirken gegen die Bewegungsrichtung und müssen durch den Schub überwunden werden.
c) Potenzialsenke: Das ist der Bereich, in dem verdrängte Luft in den statischen Propulsor unter einem Aufnahmewinkel "hineinstürzt". Der Schubflächenwinkel der Schubflächen ist angepasst auf den Aufnahmewinkel. Auch kann der Aufnahmewinkel an den Schubflächenwinkel angepasst werden, z.B. durch entsprechende Ausformung des Verdrängungskörpers. Weil Luft aus dem Inneren des statischen Propulsors nach hinten in den Strahl gefördert wird, entsteht eine Unterdruckzone, die durch Nachströmen von verdrängter Luft aus der Umgebung aufgefüllt wird. Dabei fliesst sie in die Zwischenräume der statischen Schubflächen und erzeugt dort wegen der aerodynamisch wirksamen Profile eine asymmetrische Druckverteilung. So entsteht an den Schubflächen eine Auftriebskraft wie bei den Tragflächen eines Flugzeugs. Weil sich die statischen Schubflächen mit dem Flugzeug durch die Luft bewegen "erntet" diese Auftriebskraft zusätzliche Energie aus der Propulsionsströmung, Das funktioniert analog zum Flugmanöver wie in Figur 1, nun aber horizontal und nicht vertikal. Der Energieanteil aus der "Ernte" spart Treibstoff und steigert die Effizienz des Antriebs.
d) Rückfluss: Das ist der Bereich, in dem sich das Loch in der Luft wieder schliesst, in dem der "Tunnel" wieder einstürzt, den der Antrieb in die Atmosphäre gebohrt hat. An der Aussenseite des Propellergehäuses GH steigt der statische Druck wieder an. Weil der Einlauf dieses Gehäuses vor dem Propeller P als Einlaufdüse ED ausgebildet ist, entsteht an der Gehäuseoberfläche ebenfalls eine asymmetrische Druckverteilung, aus deren Integration ein Schubanteil in Fahrtrichtung resultiert, mit Ernte-Wirkung. Das ist analog zu den Schubflächen im statischen Propulsor. Der Hauptanteil des Schubes stammt hier aber aus der Beschleunigung der Luft nach hinten in den Strahl am Ausgang des dynamischen Propulsors DP. Dafür ist Wellenarbeit erforderlich, welche die Antriebsmaschine AM liefert.
e) Freistrahl: Das ist der Bereich hinter dem Strahlantrieb, in dem Umgebungsluft an den Strahlgrenzen mitgerissen wird. Es entsteht ein Freistrahl mit einer zusätzlichen Transportströmung von Luft aus der Nähe der Strahlgrenze. Die Trägheitskräfte dieser Transportströmung wirken strahlaufwärts bis auf die Rückseite der rotierenden Propellerblätter im Gehäuse des dynamischen Propulsors.

Im Strömungsfeld entstehen aus der Wechselwirkung zwischen der Luft und den Bauteilen des Strahlantriebs also wirksame Kräfte mit der und gegen die Fahrtrichtung. Dabei basiert der dominante Kraftanteil in den fünf Zonen auf unterschiedlichen physikalischen Mechanismen. Das zeigt Figur 4.
a) Bugwelle: In diesem Bereich wirken Druckkräfte aus dem Staueffekt gegen die Fahrtrichtung. Sie bilden einen Teil der Widerstandskräfte aus der Strömung.
b) Verdrängung: In diesem Bereich wirken Reibungskräfte in der Grenzschicht. Reibungskräfte bremsen das Fahrzeug und beschleunigen die Luft in Fahrtrichtung. Daraus entsteht ein Energiefluss aus dem Fahrzeug in die Grenzschicht hinein.
c) Potenzialsenke: Hier wirkt der Druckgradient aus einem Potenzialunterschied zwischen dem Innenraum des statischen Propulsors und der nahen Umgebung. Im Innenraum ist der Druck kleiner und es entsteht eine einwärts gerichtete Strömung um die Schubflächen herum. An jeder einzelnen statischen Schubfläche SFi entsteht so eine Auftriebskraft Fsi mit einer Kraftkomponente in Fahrtrichtung. Die Summe all dieser Kraftkomponenten liefert den zusätzlichen Schubanteil, der durch die Propulsionsströmung selbst induziert wird. Damit erntet der Strahlantrieb Energie aus der Strömung, denn die statischen Schubflächen bewegen sich mit dem Strahlantrieb durch den Raum. Die geerntete Leistung ist "Kraft mal Geschwindigkeit". Daraus folgt, dass der Energieanteil aus der Ernte mit der Fahrtgeschwindigkeit wächst, was die Effizienz des Antriebs mit wachsender Geschwindigkeit erhöht. Das kann kein bekannter Strahlantrieb leisten.
d) Rückfluss: Hier wirken zum einen die statischen Druckkräfte an der Oberfläche des Gehäuses. Wegen der Einlaufdüse vor dem Propeller ergibt sich aus deren Integration über die Gehäuseoberfläche eine Schubkraft in Fahrtrichtung, genau wie bei den statischen Schubflächen davor. Der Hauptanteil der Kraft stammt aber aus den Trägheitskräften infolge der Beschleunigung der Strömung durch den Propeller. Wie das Gesetz nach Newton erklärt, entsteht am Propeller die Schubkraft Fp als Reaktion auf den rückwärts beschleunigten Luftmassenstrom. Diesen Kraftmechanismus nutzen alle bekannten Strahlantriebe nach dem Stand der Technik. Damit kann man aber keine Energie aus der Strömung ernten, weil der Propeller unter Verbrauch von Wellenarbeit angetrieben werden muss.
e) Freistrahl: Hier wirken Scherkräfte an den Strahlgrenzen, mit denen Luft aus der Strahlumgebung nach hinten beschleunig wird. Daraus resultiert eine Rückwirkung strahlaufwärts in Fahrtrichtung, bis an die Rückseite der drehenden Blätter des Propellers.

Bei allen bekannten Strahlantrieben nach dem Stand der Technik entsteht der Schub nur aus den Trägheitskräften nach Newton als Reaktion auf die Beschleunigung des Luftmassenstroms gegen die Fahrtrichtung.

Bei dem erfindungsgemässen Strahlantrieb wird die Luft zuerst seitlich verdrängt, und dann von der Seite kommend über die statischen Schubflächen an den Propeller geleitet. Dabei entsteht Auftrieb an den Schubflächen, mit einer zusätzlichen Kraftkomponente in Fahrtrichtung, und das spart Treibstoff.

Hier stammt der Schub also zum einen aus Trägheitskräften als Reaktion auf die Beschleunigung durch den rotierenden Propeller, der braucht Wellenarbeit, und zum anderen aus Auftriebskräften an den Schubflächen des statischen Propulsors, das geht ohne Wellenarbeit. Die laterale Strömung an den statischen Schubflächen liefert eine in Fahrtrichtung wirkende Kraft, genau wie bei einem Segelboot mit Kurs "hoch am Wind". Segelboote können nicht gegen den Wind fahren, aber sie können gegen den Wind kreuzen. Dazu muss der Wind aber von der Seite kommen und nicht von vorne. Der neue Strahlantrieb nutzt den Verdrängungskörper, um die Richtung der dem statischen Propulsor zufliessenden Strömung lateral zu versetzen. So entstehen dort Auftriebskräfte mit einer Komponente in Fahrtrichtung, und nur diese Kräfte können Energie aus der Strömung ernten. Strahlantriebe nach dem Stand der Technik können das nicht.

Figur 5 zeigt als weiteres Ausführungsbeispiel das Schema eines Flugzeugantriebs, bei dem der Propulsor durch eine Gasturbine GT angetrieben wird. Sie ist im Verdrängungskörper eingebaut und erhält den Primär-Massenstrom M1 von vorne aus der Fahrtrichtung. Ein Einlaufdiffusor erhöht hier den statischen Druck um den Wirkungsgrad des Joule-Prozesses zu steigern. Die Darstellung zeigt eine Turbine in Zwei-Wellen-Architektur, die den Propeller über eine Welle in einem Wellentunnel antreibt. Der Propeller fördert den Sekundär-Massenstrom M2, der über die Schubflächen des statischen Propulsors lateral aus der Umgebung einströmt. Diese Architektur entspricht beinahe den modernen Turbofan-Triebwerken mit heissem Primär-Massenstrom durch das Kerntriebwerk, und kaltem Sekundär-Massenstrom im Mantelstrom des Triebwerks. Hier steht der Fan-Rotor aber nicht mehr im Fahrtwind, sondern wird aus einer Einlaufdüse versorgt, die ihren Zustrom aus der lateral versetzten Verdrängungsströmung erhält. Der Fan-Rotor bleibt im Windschatten des Verdrängungskörpers, und seine Anströmung ist vom Fahrtwind entkoppelt. So kann man eine transsonische Anströmung der Fan-Blätter im Reiseflug bei Mach 0.85 vermeiden und die Verluste daraus senken.

Figur 6 zeigt als weiteres Ausführungsbeispiel das Schema eines Strahlantriebs, bei dem der Propulsor durch einen Elektromotor E-MOTOR angetrieben wird, der seine Energie hier aus Akkumulatoren AKKU bezieht. Beide sind wieder im Verdrängungskörper eingebaut, denn dort ist genügend Platz. Wegen der höheren Effizienz braucht der Antrieb weniger Akkus als bisher, und das Abfluggewicht sinkt bei gleicher Flugleistung. Damit lassen sich elektrisch angetrieben Flugzeuge früher realisieren als bisher.

Figur 7 zeigt als weiteres Ausführungsbeispiel eine Anordnung des neuen Strahlantriebs hinter dem Rumpf eines Flugzeugs. In einem Modul aus Verdrängungskörper und statischen Propulsor, ist der Verdrängungskörper hier der Rumpf eines Flugzeuges. Der Verdrängungskörper des Antriebs ist nun der komplette Rumpf für die Nutzlast. Damit verschwindet der Antrieb im Windschatten des Rumpfes, die projizierte Widerstandsfläche des Flugzeugs sinkt, und das Gleitverhältnis steigt. Das spart Treibstoff. Weil Triebwerksgondeln nicht mehr im Fahrtwind hängen müssen, werden die Flügel von deren Last befreit, und das Strukturgewicht kann sinken. Weniger Gewicht spart Treibstoff. All diese Massnahmen erhöhen die Effizienz des Flugzeugs.

Figur 8 zeigt als weiteres Ausführungsbeispiel das Konzept zur Verbesserung von Turbofantriebwerken nach dem Stand der Technik durch modulares Nachrüsten mit dem Verdrängungskörper und dem statischen Propulsor. Der obere Teil von Figur 8 zeigt das Schema eines bekannten Turbofan-Triebwerks in Zwei-Wellen-Architektur mit einem FAN, der von der Gasturbine GT angetrieben wird. Solche Triebwerke kann man gemäss dem unteren Teil von Figur 8 mit dem Modul bestehend aus dem Verdrängungskörper VK und dem statischen Propulsor SP nachrüsten. Sie werden vor dem Einlauf montiert und sind mit dem Triebwerk fest verbunden. Der dynamische Propulsor DP ist dann das komplette Fan-Triebwerk, angetrieben durch die Gasturbine. Damit kann man die Effizienz von vorhandenen Triebwerken nachträglich steigern, weil sie dann Energie ernten können.

Alle Beispiele wurden anhand von Flugzeugantrieben erläutert, mit Luft als Medium. Mit dem neuen Strahlantrieb ist "Aerodynamic Energy Harvesting" für den Vortrieb von Flugzeugen möglich, unabhängig von Scherwinden über dem Ozean. Jeder Anteil von geernteter Energie aus der Strömung spart Treibstoff. Dazu sind nur drei Schritte erforderlich:
1. Laterale Verdrängung von Luft vor dem Flugzeug durch einen Verdrängungskörper.
2. Seitliche Zufuhr von Luft über die Schubflächen eines statischen Propulsors mit Hilfe einer Potenzialsenke.
3. Beschleunigen von Luft gegen die Fahrtrichtung durch den dynamischen Propulsors mit Hilfe eines angetriebenen Propellers.

Diese drei Schritte sind immer erforderlich, wobei die konstruktive Ausführung der Komponenten je nach Fahrzeug und Anwendung unterschiedlich ausfallen kann.

Der Verdrängungskörper kann das gesamte Fahrzeug sein, oder nur ein Teil davon, der Rumpf, oder ein Teil davon, ein Flügelabschnitt, eine Triebwerksgondel. Sein Querschnitt kann beliebig geformt sind, kreisförmig, eckig, quadratisch, elliptisch, oval. Er sollte einen geringen cw-Wert haben, doch das ist trivial.

Die Schubflächen des statischen Propulsors sind als ringförmige Flügel dargestellt, mit gewölbten Profilschnitten, deren Sehne in Flugrichtung nach vorne geneigt ist. Das ist für die Erzeugung von Auftrieb mit Kraftkomponente in Fahrtrichtung erforderlich. Ringförmige Schubflächen sind optional. Je nach Grösse und Position des Antriebs kann der statische Propulsor auch in die Wand eines Fahrzeugs eingelassen sein, im Rumpf oder im Flügel. Dann werden die Schubflächen aus Kreissegmenten gebildet, oder aus geraden Flügelsegmenten. Wichtig ist die Position der Überdruckseite des Profilschnitts, sie zeigt immer nach aussen und hinten, und die Unterdruckseite zeigt nach innen und vorne. Der Neigungswinkel der Profilsehne gegen die Fahrtrichtung ist von der Fluggeschwindigkeit abhängig. Denkbar sind auch verstellbare Profilsegmente in den Schubflächen des statischen Propulsors.

Das Ernte-Prinzip ist auch im Wasser einsetzbar, dann ist es "Hydrodynamic Energy Harvesting", und es spart Treibstoff beim Antrieb von Schiffen.

Energy-Harvesting ist bei Strahlantrieben nach dem Stand der Technik bisher unbekannt.

Es versteht sich, dass die vorangehend gezeigten und erklärten Figuren nur mögliche Ausführungsbeispiele schematisch darstellen.

### Abkürzungen und Formelzeichen

- *AEH*: Aerodynamic Energy Harvesting
- *AM*: Antriebsmaschine
- *Aₚₐ*: Axiale Projektionsfläche für hohen Aussendruck
- *Aₚᵢ*: Axiale Projektionsfläche für niedrigen Innendruck
- *c*: Strahlgeschwindigkeit
- *d*: Durchmesser
- *dₐ*: Aussendurchmesser des Verdrängungskörpers
- *dᵢ*: Aussendurchmesser einer Schubfläche (i = 1 bis n)
- *d_{G}*: Aussendurchmesser des dynamischen Propulsors
- *dₓ*: Strahldurchmesser am Triebwerksausgang
- *DF*: Diffusor (Kanal K₀₁)
- *DP*: dynamischer Propulsor
- *ė*: Energiefluss
- *ED*: Einlaufdüse
- *Fᵢ*: Schubkraft i
- *Fₚ*: Schub aus Propulsor
- *Fₛᵢ*: Schub aus statischer Schubfläche (i = 0 bis n)
- *GH*: Gehäuse
- *GT*: Gasturbine
- *HEH*: Hydrodynamic Energy Harvesting
- *ia*: Vorderseite einer Schubfläche i oder VK oder GH
- *ib*: Rückseite einer Schubfläche i oder VK oder GH
- *Kᵢⱼ*: Kanal (i = 0 bis n-1, j = i + 1)
- *M*: Massenstrom
- *M*1: Primär-Massenstrom
- *M*2: Sekundär-Massenstrom
- *P*: Propulsor
- *pₐ*: Aussendruck
- *pᵢ*: Innendruck
- Δ*P_{Hub}*: freigewordene Hubleistung
- Δ*P_{Schub}*: erforderliche Schubleistung
- *Sᵢ*: projizierte Sehnenlänge eines Profils i
- *SF*: statische Schubfläche
- *SFᵢ*: einzelne Schubfläche aus i = 1 bis n
- *SP*: statischer Propulsor
- *v*: Reisegeschwindigkeit
- *vₓ*: Horizontalgeschwindigkeit über Grund
- *v_{y}*: Vertikalgeschwindigkeit beim Steigen
- *v*₀: Anfangsgeschwindigkeit
- *v*₁: Endgeschwindigkeit
- *Vᵢ*: Innenvolumen
- *VK*: Verdrängungskörper

### Winkel

- *αᵢ*: Profilneigungswinkel
- *βₐ*: Neigung der äusseren Leitkurve
- *βᵢ*: Neigung der inneren Leitkurve
- *β_{Fi}*: Neigung der Kraftwirklinie
- Δ*ₕₖᵢⱼ*: Radialer Versatz der Profilhinterkante
- Δ*ᵥₖᵢⱼ*: Radialer Versatz der Profilvorderkante

### Zonen der Umströmung

- A: Bugwelle
- B: Verdrängungsströmung
- C: Potenzialsenke
- D: Rückfluss
- E: Freistrahl

### Kraftwirkung der Umströmung

- A: Druckkraft
- B: Reibungskraft
- C: Auftriebskraft
- D: Trägheitskraft
- E: Scherkraft

## Patentansprüche

1. Modul zum Anbau an die Front eines Triebwerks oder zur Integration in Teile eines Fahrzeuges, die einer Strömung ausgesetzt sind, mit
• einem fluiddynamischen Verdrängungskörper (VK) mit einer Längsachse, und
• einem statischen Propulsor (SP) mit einem mittleren Aussendurchmesser, welcher statische Propulsor sich dem Verdrängungskörper (VK)entlang der Längsachse entgegen einer Antriebsrichtung anschliesst und starr mit diesem verbunden ist,
wobei der statische Propulsor eine Mehrzahl an Tragflächenelementen (SFi) aufweist, deren jeweiliger Querschnitt ein Tragflächenprofil hat,
wobei Profilsehnen des Tragflächenprofils schräg zur Längsachse ausgerichtet sind, und
wobei eine Profilsehne als Verbindungslinie zwischen einer Profilnase und einer Profilhinterkante definiert ist,
wobei der mittlere Aussendurchmesser des statischen Propulsors (SP) kleiner als ein grösster Aussendurchmesser (dₐ) des Verdrängungskörpers (VK) ist,
**dadurch gekennzeichnet, dass**
sich der statische Propulsor (SP) dort an den Verdrängungskörper (VK) anschliesst, wo der Verdrängungskörper (VK) seinen grössten Aussendurchmesser (dₐ) hat.

2. Modul nach Anspruch 1,
wobei der Verdrängungskörper und die Tragflächenelemente bezüglich der Längsachse
• rotationssymmetrisch ausgebildet sind, sowie
• zueinander konzentrisch angeordnet sind.

3. Modul nach einem der Ansprüche 1 bis 3, wobei
die Tragflächenelemente (SFi) durchgehend oder abschnittsweise kreisringförmig ausgebildet sind.

4. Modul nach Anspruch 1,
wobei der Verdrängungskörper (VK) und der statische Propulsor (SP) bezüglich einer Längsebene symmetrisch ausgebildet sind, insbesondere wobei die Tragflächenelemente (SFi) plattenförmig oder flügelförmig ausgebildet sind.

5. Modul nach einem der Ansprüche 1 und 4, wobei
der Verdrängungskörper (VK) als Rumpf eines Fahrzeuges, insbesondere eines Flugzeuges oder Schiffes, ausgebildet ist.

6. Antriebsmaschine zum Fahrzeugantrieb in einem Fluid, wie beispielsweise Wasser oder Luft, mit
• einem Modul nach Anspruch 1 und
• einem dynamischen Propulsor (DP), der ein Gehäuse mit mindestens einem Propeller (P) aufweist,
wobei
• der statische Propulsor (SP) sich dem dynamischen Propulsor (DP) entlang einer Längsachse in einer Antriebsrichtung anschliesst und starr mit diesem verbunden ist, und
der fluiddynamische Verdrängungskörper (VK) sich dem statischen Propulsor (SP) in Antriebsrichtung anschliesst und starr mit diesem verbunden ist.

7. Antriebsmaschine nach Anspruch 6,
wobei der Verdrängungskörper (VK), die Tragflächenelemente (SFi) und das Gehäuse bezüglich einer Längsachse
• rotationssymmetrisch ausgebildet sind, sowie
• zueinander konzentrisch angeordnet sind.

8. Antriebsmaschine nach einem der Ansprüche 6 bis 7,
wobei ein mittlerer Aussendurchmesser des statischen Propulsors (SP)
• kleiner als ein grösster Aussendurchmesser des Verdrängungskörpers (VK), und
• grösser als ein grösster Aussendurchmesser des dynamischen Propulsors (DP) ist.

9. Antriebsmaschine nach einem der Ansprüche 6 bis 8,
wobei die Tragflächenelemente (SFi) durchgehend oder abschnittsweise kreisringförmig ausgebildet sind.

10. Antriebsmaschine nach einem der Ansprüche 6 bis 9,
wobei der Verdrängungskörper (VK)
• in seinem Inneren eine Gasturbine (GT) zum Antreiben des mindestens einen Propellers (P),
• eine Kraftstoffzufuhr für die Gasturbine (GT), und
• an seiner Oberfläche eine Öffnung für eine Sauerstoffzufuhr zur Kraftstoffverbrennung in der Gasturbine (GT) aufweist, und
wobei die Gasturbine (GT) über eine sich bis zum dynamischen Propulsor (DP) fortsetzende Welle mit dem mindestens einen Propeller (P) verbunden ist.

11. Antriebsmaschine nach einem der Ansprüche 6 bis 9,
zum Fahrzeugantrieb in einem Fluid,
wobei der Verdrängungskörper (VK) in seinem Inneren
• einen Elektromotor zum Antreiben des mindestens einen Propellers (P), und
• insbesondere einen Akkumulator aufweist,
wobei der Elektromotor über eine sich bis zum dynamischen Propulsor fortsetzende Welle mit dem mindestens einen Propeller verbunden ist.

12. Antriebsmaschine nach einem der Ansprüche 6 bis 11,
wobei der dynamische Propulsor (DP) eine Einlaufdüse aufweist.

13. Verfahren zur Erzeugung von Schub, mit den Schritten:
• Verdrängen eines Fluidmassenstroms mit dem fluiddynamischen Verdrängungskörper (VK) eines Moduls nach Anspruch 1 oder einer Antriebsmaschine nach Anspruch 6,
• Einströmen von verdrängtem Fluidmassenstrom in den statischen Propulsor (SP) des Moduls oder der Antriebsmaschine, und
• Hervorrufen einer Kraft an den Tragflächenelementen (SFi) durch eine Druckdifferenz an den umströmten Oberflächen der Tragflächenelemente (SFi),
wobei die Kraft zumindest eine in Antriebsrichtung weisende Komponente hat.

14. Verfahren nach Anspruch 13,
mit den weiteren Schritten:
• Ausströmen von verdrängtem Fluidmassenstrom aus dem statischen Propulsor (SP),
• Einströmen von verdrängtem Fluidmassenstrom in einen dynamischen Propulsor (DP)der Antriebsmaschine, insbesondere zusätzlich vermittels einer Einlaufdüse, und
• Beschleunigen des in den dynamischen Propulsor (DP) eingeströmten Fluidmassenstroms mittels mindestens eines Propellers (P), und
• Abgabe des beschleunigten Fluidmassenstroms als Freistrahl an die Umgebung.

## Claims

1. Module for attachment to the front of an engine or for integration into parts of a vehicle that are exposed to a flow, with
• a fluid-dynamic displacement body (VK) with a longitudinal axis, and
• a static propulsor (SP) with a mean outer diameter, which static propulsor adjoins the displacement body (VK) along the longitudinal axis in the opposite direction to the direction of propulsion and is rigidly connected to it,
wherein the static propulsor has a plurality of wing elements (SFi), the respective cross-sections of which have an airfoil profile,
wherein profile chord lines of the airfoil profile are aligned obliquely to the longitudinal axis, and
wherein a profile chord line is defined as connecting line between a profile leading edge and a profile trailing edge,
wherein the mean outer diameter of the static propulsor (SP) is smaller than a largest outer diameter (dₐ) of the displacement body (VK),
**characterized in that**
the static propulsor (SP) adjoins the displacement body (VK) at the point where the displacement body (VK) has its largest outer diameter (dₐ).

2. Module according to claim 1,
wherein the displacement body and the wing elements are designed, with respect to the longitudinal axis, to be
• rotationally symmetrical and
• are arranged concentrically with respect to each other.

3. Module according to one of claims 1 to 3, wherein the wing elements (SFi) are designed to be circular in shape, either continuously or in sections.

4. Module according to claim 1, wherein the displacement body (VK) and the static propulsor (SP) are designed symmetrically with respect to a longitudinal plane, in particular wherein the wing elements (SFi) are plate-shaped or wing-shaped.

5. Module according to one of claims 1 and 4, wherein the displacement body (VK) is designed as the fuselage of a vehicle, in particular an aircraft or ship.

6. Drive machine for driving a vehicle in a fluid, such as water or air, comprising
• a module according to claim 1 and
• a dynamic propulsor (DP) having a housing with at least one propeller (P),
wherein
• the static propulsor (SP) adjoins the dynamic propulsor (DP) along a longitudinal axis in a drive direction and is rigidly connected thereto, and
the fluid-dynamic displacement body (VK) adjoins the static propulsor (SP) in the drive direction and is rigidly connected thereto.

7. Drive machine according to claim 6,
wherein the displacement body (VK), the wing elements (SFi) and the housing are designed, with respect to a longitudinal axis, to be
• rotationally symmetrical and
• are arranged concentrically with respect to each other.

8. Drive machine according to one of claims 6 to 7,
wherein a mean outer diameter of the static propulsor (SP)
• is smaller than a largest outer diameter of the displacement body (VK), and
• is larger than a largest outer diameter of the dynamic propulsor (DP).

9. Drive machine according to one of claims 6 to 8, wherein the wing elements (SFi) are designed to be circular in shape, either continuously or in sections.

10. Drive machine according to one of claims 6 to 9, wherein the displacement body (VK)
• has a gas turbine (GT) in its interior for driving the at least one propeller (P),
• a fuel supply for the gas turbine (GT), and
• an opening on its surface for an oxygen supply for fuel combustion in the gas turbine (GT), and
wherein the gas turbine (GT) is connected to the at least one propeller (P) via a shaft extending to the dynamic propulsor (DP).

11. Drive machine according to one of claims 6 to 9, for driving a vehicle in a fluid,
wherein the displacement body (VK) has in its interior
• an electric motor for driving the at least one propeller (P), and
• in particular an accumulator,
wherein the electric motor is connected to the at least one propeller via a shaft extending to the dynamic propulsor.

12. Drive machine according to one of claims 6 to 11, wherein the dynamic propulsor (DP) has an inlet nozzle.

13. Method for generating thrust, having the steps of:
• displacing a fluid mass flow with the fluid-dynamic displacement body (VK) of a module according to claim 1 or a drive machine according to claim 6,
• inflow of displaced fluid mass flow into the static propulsor (SP) of the module or the drive machine, and
• generating a force on the wing elements (SFi) by means of a pressure difference on the surfaces of the wing elements (SFi) around which the fluid flows,
wherein the force has at least one component pointing in a driving direction.

14. Method according to claim 13,
having the further steps of:
• outflow of displaced fluid mass flow from the static propulsor (SP),
• inflow of displaced fluid mass flow into a dynamic propulsor (DP) of the drive machine, in particular additionally by means of an inlet nozzle, and
• accelerating the fluid mass flow that has flowed into the dynamic propulsor (DP) by means of at least one propeller (P), and
• discharging the accelerated fluid mass flow as a free jet into the environment.

## Revendications

1. Module destiné à être monté à l'avant d'un groupe moteur ou à être intégré dans des éléments d'un véhicule exposés à un courant, comportant
• un corps déplaceur (VK) par dynamique des fluides présentant un axe longitudinal, et
• un propulseur statique (SP) présentant un diamètre extérieur moyen, lequel propulseur statique se raccorde au corps déplaceur (VK) le long de l'axe longitudinal à l'opposé d'une direction d'entraînement et est relié de façon rigide à celui-ci,
dans lequel le propulseur statique comporte une pluralité d'éléments de surface portante (SFi) dont la section transversale respective présente un profil de surface portante,
dans lequel des cordes de profil du profil de la surface portante sont orientées en oblique par rapport à l'axe longitudinal, et
dans lequel une corde de profil est définie comme une ligne de jonction entre un nez de profil et un bord arrière de profil,
dans lequel le diamètre extérieur moyen du propulseur statique (SP) est inférieur à un diamètre extérieur maximum (dₐ) du corps déplaceur (VK),
**caractérisé en ce que**
le propulseur statique (SP) se raccorde au corps déplaceur (VK) à l'endroit où le corps déplaceur (VK) présente son diamètre extérieur maximum (dₐ).

2. Module selon la revendication 1, dans lequel le corps déplaceur et les éléments de surface portante, par rapport à l'axe longitudinal,
• sont exécutés en symétrie de rotation, et
• sont disposés de manière concentrique les uns par rapport aux autres.

3. Module selon l'une des revendications 1 à 3, dans lequel les éléments de surface portante (SFi) sont conçus de manière continue ou par segments en forme d'anneau circulaire.

4. Module selon la revendication 1, dans lequel le corps déplaceur (VK) et le propulseur statique (SP) sont exécutés de façon symétrique par rapport à un plan longitudinal, dans lequel en particulier les éléments de surface portante (SFi) sont exécutés en forme de plaque ou d'aile.

5. Module selon l'une des revendications 1 et 4, dans lequel le corps déplaceur (VK) est exécuté en tant que corps d'un véhicule, en particulier d'un avion ou d'un navire.

6. Machine de propulsion permettant de propulser un véhicule dans un fluide, comme par exemple de l'eau ou de l'air, comprenant
• un module selon la revendication 1, et
• un propulseur dynamique (DP) qui présente un carter comportant au moins une hélice (P),
dans lequel
• le propulseur statique (SP) se raccorde
au propulseur dynamique (DP) le long d'un axe longitudinal dans une
direction d'entraînement, et est relié de façon rigide à celui-ci, et
le corps déplaceur par dynamique des fluides (VK) se raccorde au propulseur statique (SP) dans la direction d'entraînement et est relié de façon rigide à celui-ci.

7. Machine de propulsion selon la revendication 6,
dans lequel le corps déplaceur (VK), les
éléments de surface portante (SFi) et le carter, par rapport à un axe longitudinal,
• sont exécutés en symétrie de rotation, et
• sont disposés de manière concentrique les uns par rapport aux autres.

8. Machine de propulsion selon l'une des revendications 6 à 7, dans lequel un diamètre extérieur moyen du propulseur statique (SP)
• est inférieur à un diamètre extérieur maximum du corps déplaceur (VK), et
• est supérieur à un diamètre extérieur maximum du propulseur dynamique (DP).

9. Machine de propulsion selon l'une des
revendications 6 à 8, dans lequel les éléments de surface portante (SFi) sont exécutés de manière continue ou par segments en forme d'anneau circulaire.

10. Machine de propulsion selon l'une des revendications 6 à 9, dans lequel le corps déplaceur (VK) présente,
• dans son intérieur, une turbine à gaz (GT) permettant d'entraîner l'hélice (P), au moins au nombre de une,
• une alimentation en carburant pour la turbine à gaz (GT), et
• à sa surface, une ouverture pour une alimentation en oxygène destinée à la combustion du carburant dans la turbine à gaz (GT), et
dans lequel la turbine à gaz (GT) est reliée à l'hélice (P), au moins au nombre de une, par un arbre qui se prolonge jusqu'au propulseur dynamique (DP).

11. Machine de propulsion selon l'une des revendications 6 à 9, destiné à propulser un véhicule dans un fluide,
dans lequel le corps déplaceur (VK), dans son intérieur, présente
• un moteur électrique destiné à entraîner l'hélice (P), au moins au nombre de une, et
• présente en particulier un accumulateur, le moteur électrique étant relié à l'hélice, au moins au nombre de une, par un arbre se prolongeant jusqu'au propulseur dynamique.

12. Machine de propulsion selon l'une des revendications 6 à 11, dans lequel le propulseur dynamique (DP) comporte une tuyère d'admission.

13. Procédé pour générer une poussée, comprenant les étapes suivantes consistant à :
• déplacer un flux massique de fluide à l'aide du corps déplaceur par dynamique des fluides (VK) d'un module selon la revendication 1 ou d'une machine de propulsion selon la revendication 6,
• introduire le flux massique de fluide déplacé dans le propulseur statique (SP) du module ou de la machine de propulsion, et
• générer une force sur les éléments de surface portante (SFi) par une différence de pression au niveau des surfaces des éléments de surface portante (SFi) entourées par l'écoulement,
dans lequel la force ayant au moins une composante orientée dans la direction d'entraînement.

14. Procédé selon la revendication 13,
comprenant les étapes supplémentaires suivantes consistant à :
• faire sortir le flux massique de
fluide déplacé hors du propulseur
statique (SP),
• introduire le flux massique de fluide déplacé dans un propulseur dynamique (DP) de la machine de propulsion, en particulier de plus au moyen d'une buse d'admission, et
• accélérer le flux massique de fluide introduit dans le propulseur dynamique (DP) au moyen d'au moins une hélice (P), et
• émettre dans l'environnement le flux massique de fluide accéléré sous forme de jet libre.
